## Europäisches Patentamt

## European Patent Office

## Office européen des brevets

(19)

(11) Veröffentlichungsnummer: **0 119 164**
**B1**

(12) # EUROPÄISCHE PATENTSCHRIFT

(45) Veröffentlichungstag der Patentschrift:
**22.06.88**

(51) Int. Cl.⁴: **C 08 L 63/00, C 08 G 59/40**

(21) Anmeldenummer: **84810112.7**

(22) Anmeldetag: **06.03.84**

(54) Duroplastischer Pulverlack und dessen Verwendung zur Schweissnahtabdeckung.

(30) Priorität: **09.03.83 CH 1264/83**

(43) Veröffentlichungstag der Anmeldung:
**19.09.84 Patentblatt 84/38**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**EP - A - 0 002 718**
**DE - A - 2 130 607**
**GB - A - 2 055 843**

**Die Akte enthält technische Angaben, die nach dem Eingang der Anmeldung eingereicht wurden und die nicht in dieser Patentschrift enthalten sind.**

(73) Patentinhaber: **Vernicolor AG Lack- und Farbenfabrik,**
**CH-8627 Grüningen (CH)**

(72) Erfinder: **Widmer, Hans Rudolf, In der Hueb,**
**CH-8634 Hombrechtikon (CH)**
Erfinder: **Schmid, Christoph, General-Wille-Strasse 10,**
**CH-8706 Meilen (CH)**

(74) Vertreter: **Gachnang, Hans Rudolf, Algisserstrasse 33,**
**CH-8500 Frauenfeld (CH)**

## Beschreibung

Die Erfindung betrifft einen duroplastischen Pulverlack, enthaltend ein aromatisches Epoxidharzgemisch aus mindestens zwei Komponenten, deren erste pro Molekül im Mittel maximal 2 Epoxidgruppen und deren zweite pro Molekül im Mittel mehr als 2 Epoxidgruppen enthält, einen sauren Härter und einen Katalysator. Die Erfindung betrifft auch die Verwendung des Pulverlackes zur Schweißnahtabdeckung im Inneren von Metallbehältern für Lebensmittel oder Getränke.

Es sind duroplastische Pulverlacke auf Epoxidharzbasis bekannt, die zur Abdeckung der gesamten Innenwand von Metallbehältern zur Aufnahme von Lebensmitteln oder Getränken verwendet werden (GB-A-2 055 843). Diese duroplastischen Pulverlacke enthalten die vorgenannten oder andere Epoxidharze, insbesondere auch Bisphenol A-Epoxidharze mit 0,5 Epoxidäquivalenten pro kg im Gemisch mit epoxidierten Cresolnovolacken mit 4,8 bis 5,2 Epoxidäquivalenten pro kg, in Verbindung mit einem Härter aus Polyphenolen und/oder Oligophenolen bzw. -cresolen, die nicht weniger als drei phenolische Hydroxylgruppen und keine anderweitigen funktionellen Gruppen enthalten. Als Katalysatoren werden bevorzugt zinnorganische Verbindungen, Imidazolderivate und 4-Alkylpyridine verwendet. Für in Lösung aufgetragene Lacke wird als Härter ein Kondensationsprodukt aus Bisphenol A-diglycidylether und einem molekularen Überschuß eines Cresolnovolackes vorgeschlagen, das frei von Epoxidgruppen ist und ebenfalls 3 phenolische Hydroxylgruppen enthält.

Aus der EP-A1-2718 sind ein für Lacke geeignetes Trimellithsäureestergemisch und ein solches Gemisch enthaltender Lack bekannt, der mit einem Gemisch von Epoxidharzen mit ≤2 Epoxidgruppen pro Molekül gebildet wird. Das Trimellithsäureestergemisch stellt einen sauren Polyester dar, der durch Polykondensation aus Trimellithsäureanhydrid und einem aliphatischen Diol erhalten wird. Die so erhaltenen Lacke werden ausschließlich in Lösungen aufgetragen und enthalten Zinnoctoat als Katalysator. Der Lack dient zur Innenlackierung von Lebensmittel enthaltenden Dosen.

Durch die DE-A-2 130 607 ist es bekannt, die überlappenden Ränder von Metalldosen durch Polyamidschichten zu verbinden. Die Haftung der Polyamidschichten an dem Metall wird durch einen Primer-Überzug verbessert, der vorzugsweise aus einem vorkondensierten Epoxidharz gebildet wird, das aus Bisphenol A-diglycidylether und einem Gemisch aus einwertigen und mehrwertigen Phenolen wie Bisphenol A gebildet wird.

Die Aufgabe der vorliegenden Erfindung besteht darin, einen duroplastischen Pulverlack zu schaffen, der für die Abdeckung der Schweißnaht im Inneren von Metallbehältern geeignet ist und unmittelbar nach dem Schweißvorgang auf die noch heiße Schweißnaht aufgebracht werden kann, ohne daß dadurch die Verteilung des Duroplasten über die Schweißnaht und seine Eigenschaften nachteilig beeinflußt werden.

Erfindungsgemäß wird diese Aufgabe dadurch gelöst, daß der Härter aus der Gruppe Kondensationsprodukt des Diglycidylethers von Bisphenol A mit Bisphenol A mit einem auf phenolische Hydroxygruppen bezogenen Äquivalentgewicht im Bereich von 220–280, saurer Polyester auf der Basis Trimellithsäureanhydrid/aliphatisches Polyol oder deren Mischung ausgewählt ist.

Vorzugsweise enthält das Epoxidharzgemisch als zweite Komponente ein epoxidiertes Novolackharz mit einem Epoxidäquivalentgewicht im Bereich von 150–220 in einem Mengenanteil von 5–15 Gew.-%, bezogen auf das Gesamtgewicht des aromatischen Epoxidharzgemisches = 100.

Eine bevorzugte Zusammensetzung des Pulverlackes enthält 72–73 Gew.-% des aromatischen Epoxidharzgemisches und 25–27 Gew.-% des Kondensationsproduktes von Bisphenol A-diglycidylether und Bisphenol A, jeweils bezogen auf das Gesamtgewicht des Pulverlackes = 100.

Vorteilhafterweise ist der Katalysator aus der Gruppe Imidazol, 2-Methylimidazol, Ethyltriphenylphosphoniumchlorid oder ein anderes Salz desselben, Aluminiumacetylacetonat, primäres, sekundäres oder tertiäres Aminophenol, ein Toluolsulfonsäuresalz ausgewählt.

Die erfindungsgemäß zusammengesetzten duroplastischen Pulverlacke haben vorteilhafterweise bei Umgebungstemperatur eine hohe Lagerbeständigkeit und einen Erweichungspunkt im Bereich von 65–100 °C, so daß sie nach üblichen Verfahrensweisen leicht hergestellt und über lange Zeiten unverändert gelagert werden können.

Duroplastische Pulverlacke nach der Erfindung lassen sich bei Temperaturen über 200 °C in sehr kurzer Zeit, zum Beispiel im Bereich zwischen 230 und 350 °C innerhalb von 3 bis 20 Sekunden, zu einem flexiblen Duroplasten härten.

Die vorteilhaften Eigenschaften des duroplastischen Pulverlacks und des daraus durch Härtung hergestellten Duroplasten beruhen unter anderem darauf, daß trotz der hohen Lagerbeständigkeit sehr kurze Härtungszeiten erzielt werden, die die Verarbeitung in einem Durchlaufofen ermöglichen. Der Duroplast ist weitgehend resistent gegen die Einwirkung von Chemikalien und geruchs- und geschmacksfrei und bildet eine gut haftende, verformbare und sterilisierbare, beständige Beschichtung. Die Schweißnaht ist gerade auch an den Kanten gleichmäßig und durchgehend abgedeckt. Dabei besitzt der gebildete Duroplast nicht nur die erforderliche Härte und hohe Schlagfestigkeit, sondern in besonderem Maße auch eine hohe Flexibilität, so daß die Abdeckung der Schweißnaht Verformungen des Metallbehälters ohne Ablösung oder Rißbildung folgen kann.

Der erfindungsgemäße Pulverlack kann weiterhin gegebenenfalls Verlaufmittel, Rieselhilfen, Pigmente, Füllstoffe, Verdickungsmittel oder auch deren Mischung enthalten, ohne daß die vorteilhaften Eigenschaften des daraus durch Härtung hergestellten flexiblen Duroplasten nachteilig beeinflußt werden.

Nach der Erfindung wird der duroplastische Pulverlack mit der vorstehend angegebenen Zusammensetzung zur Abdeckung von Schweißnähten im Inneren von Metallbehältern für Lebensmittel oder Getränke verwendet. Dies wird dadurch ermöglicht, daß der durch Härtung aus dem Pulverlack hervorgehende Duroplast eine beständige Beschichtung bildet, die allen derzeit geltenden lebensmittelrechtlichen Vorschriften genügt.

Die Erfindung wird nachstehend anhand von Ausführungsbeispielen näher erläutert.

Beispiele 1 bis 4

Die in der nachfolgenden Tabelle zusammengefaßt dargestellten Beispiele von duroplastischen Pulverlacken sind aus den folgenden Komponenten zusammengesetzt:

1. Ein kommerziell erhältliches aromatisches Epoxidharz auf der Basis Epichlorhydrin-Bisphenol A mit einem Epoxidäquivalentgewicht (nachfolgend mit EEW bezeichnet) im Bereich von 800–3000, das pro Molekül im Mittel zwei Epoxidgruppen enthält;

2. ein kommerziell erhältliches, epoxidiertes Novolackharz mit einem EEW im Bereich von 150–220, das pro Molekül im Mittel ca. 2,5 Epoxidgruppen enthält;

3. ein Härter in Form eines Kondensationsproduktes aus 100–150 Gewichtsteilen des Diglycidylethers von Bisphenol A und 100–200 Gewichtsteilen Bisphenol A mit folgenden Spezifikationen:
Äquivalentgewicht
bezogen auf phenolisches Hydroxyl      220–280
Viskosität bei 150 °C      50–1000 mPas
Schmelzbereich      40–100 °C;

4. N-Dimethylaminophenol als Katalysator.

In der nachfolgenden Tabelle bezeichnen die Zahlen Gewichtsteile der in der Tabelle aufgeführten Komponenten.

Zusammensetzung der Ausführungsbeispiele von duroplastischen Pulverlacken

| Beispiele | 1 | 2 | 3 | 4 |
|---|---|---|---|---|
| Epoxidharz; EEW 800 | 22,0 | – | 44,0 | 24 |
| Epoxidharz; EEW 2500 | 22,0 | 44,0 | – | 25 |
| Epoxidiertes Novolackharz; EEW 180 | 5,0 | 5,0 | 5,0 | – |
| Härter | 17,5 | 17,5 | 17,5 | 17,5 |
| Katalysator | 0,5 | 0,5 | 0,5 | 0,5 |
| Verlaufmittel | 0,5 | 0,5 | 0,5 | 0,5 |

Die in den Beispielen 1 bis 4 der Tabelle aufgeführten aromatischen Epoxidharze haben Epoxidäquivalentgewichte im Bereich von 800–3000. Es können jedoch auch allgemein aromatische Epoxidharze verwendet werden, deren Epoxidäquivalentgewicht im Bereich von 500–20000 liegt.

Die in der Tabelle aufgeführten Epoxidharzgemische enthalten 11,4 Gew.-% des epoxidierten Novolackharzes; es sind jedoch auch Pulverlacke verwendbar, bei denen das Epoxidharzgemisch weniger, nämlich bis herunter zu 5 Gew.-% und mehr, nämlich bis zu 15 Gew.-%, des epoxidierten Novolackharzes enthält. Der Mengenanteil des epoxidierten Novolackharzes ist nicht nur für die Lagerstabilität und die Härtungstemperatur und -geschwindigkeit, sondern auch für die Eigenschaften des durch die Härtung erhaltenen Duroplasten von Bedeutung.

Anstelle des Kondensationsproduktes aus dem Diglycidylether von Bisphenol A und Bisphenol A kann auch ein aus Trimellithsäureanhydrid und einem aliphatischen Diol, Triol oder dergleichen hergestellter saurer Polyester als Härter eingesetzt werden. Bei Verwendung von Trimellithsäureanhydridadukt als Härter empfiehlt sich der Zusatz eines flexibilitätserhöhenden Mittels, z.B. eines möglichst linearen Terephthalsäurepolyesters. Es können auch Mischungen solcher Härter eingesetzt werden.

Der Pulverlack enthält in den in der Tabelle angegebenen Formulierungen 72,6 Gew.-% aromatisches Epoxidharzgemisch und 26,0 Gew.-% Härter. Diese Zusammensetzung kann in gewissen engen Grenzen variiert werden; so lassen sich allgemein gleiche Ergebnisse erzielen, wenn der Pulverlack 72–73 Gew.-% des aromatischen Epoxidharzgemisches und 25–27 Gew.-% des Härters enthält.

Die in der Tabelle angegebenen Formulierungen enthalten 0,74 Gew.-% Dimethylaminophenol als Katalysator. Es können auch Ethyltriphenylphosphoniumchlorid oder andere Ethyltriphenylphosphoniumsalze, aber auch Imidazol, 2-Methylimidazol, Aluminiumacetylacetonat, primäre oder sekundäre Aminophenole oder ein Toluolsulfonsäuresalz als Katalysatoren Verwendung finden. Der Mengenanteil des Katalysators im Pulverlack übersteigt im allgemeinen 1,5 Gew.-% nicht.

Die vorstehend beschriebenen duroplastischen Pulverlacke haben eine hohe Lagerbeständigkeit und können daher ohne chemische Veränderung über verhältnismäßig lange Zeiten gelagert werden, ohne daß ihre Wirksamkeit dadurch beeinträchtigt wird.

Nach den in der Tabelle angegebenen Formulierungen zusammengesetzte duroplastische Pulverlacke haben einen Erweichungspunkt im Bereich von 65–100 °C. Sie sind daher bei üblichen Umgebungs- und Verarbeitungstemperaturen pulverförmig und frei von Verklebungen und Zusammenbakkungen. Andererseits können sie in einem Temperaturbereich hergestellt und verarbeitet werden, der nach üblichen Verfahrensweisen gut zugänglich ist. Beispielsweise werden die angegebenen Pulverlacke dadurch hergestellt, daß die Bestandteile mittels eines Extruders im Temperaturbereich von 90 bis 100 °C durchgemischt, abgekühlt und anschließend gemahlen und ausgesiebt werden.

Für die Weiterverarbeitung des duroplastischen Pulverlacks, insbesondere für die gleichförmige Verteilung des durch die nachfolgende Härtung gebildeten Duroplasten über die Schweißnaht und die gleichmäßige Abdeckung der Kanten der Schweißnaht, hat es sich als vorteilhaft erwiesen, den Pulverlack nach der Extrusion, aber vor der Mahlung bei einer Temperatur im Bereich von 50–100 °C in einem Zeitraum zu tempern, der 1 Stunde bis mehrere Tage umfassen kann. Günstig für die Verarbeitung des duroplastischen Pulverlacks hat sich auch der Zusatz eines handelsüblichen Verlaufmittels erwiesen. Solche Verlaufmittel bestehen üblicherweise vorwiegend aus Polyacrylsäureestern.

Der wie vorstehend beschriebene duroplastische Pulverlack nach den Beispielen 1 bis 4 wird vorteilhafterweise durch elektrostatische Aufladung auf die Schweißnaht des jeweiligen Metallbehälters aufgebracht. Dabei ist es günstig, daß der Pulverlack unmittelbar nach dem Schweißvorgang auf die noch heiße Schweißnaht aufgebracht werden kann, ohne daß dadurch die Verteilung des Duroplasten über die Schweißnaht und seine Eigenschaften nachteilig beeinflußt werden.

Der Metallbehälter, dessen Schweißnaht so mit dem duroplastischen Pulverlack versehen worden ist, wird anschließend einer Hitzebehandlung unterworfen, während derer der duroplastische Pulverlack in einen Duroplasten umgewandelt wird. Diese Hitzebehandlung kann auf verschiedene Weise erfolgen. Im technischen Betrieb hat es sich als vorteilhaft erwiesen, die Metallbehälter mit der Schweißnahtabdeckung durch einen Durchlaufofen zu fördern, in dem der die Schweißnaht abdeckende Pulverlack rasch auf Temperaturen bei oder über 200 °C erhitzt und zu einem flexiblen Duroplasten gehärtet wird.

Die Härtung des duroplastischen Pulverlacks kann dabei je nach den Anforderungen unter unterschiedlichen Bedingungen vorgenommen werden; dabei ist zu berücksichtigen, daß bei relativ niedrigen Härtungstemperaturen relativ längere Härtungszeiten benötigt werden. In der Praxis hat sich herausgestellt, daß bei Härtungstemperaturen im Bereich von 230–350 °C eine vollständige Härtung des duroplastischen Pulverlacks innerhalb einer Zeit von 20 bis 30 Sekunden erzielt wird. Dabei kann der Durchlaufofen bei konstanter Temperatur betrieben werden oder ein Temperaturprofil aufweisen, das nach den jeweiligen Gegebenheiten eingestellt wird.

Entsprechende, hier nicht im einzelnen aufgeführte Versuche haben ergeben, daß die vorstehend beschriebenen duroplastischen Pulverlacke ein dadurch ausgezeichnetes Härtungsverhalten besitzen, daß sie ein sehr breites Härtungsspektrum besitzen. Das bedeutet, daß ein relativ großer Temperaturbereich besteht, innerhalb dessen die erstrebte vorteilhafte Härtung nicht durch Nebenreaktionen wie Überhärtung oder thermische Abbaureaktionen beeinträchtigt wird. Dies ist besonders wichtig, da im technischen Betrieb eines Durchlaufofens die Härtungstemperaturen und die Härtungszeiten nicht mit der Präzision eingehalten werden können, wie es beispielsweise bei einem duroplastischen Pulverlack mit einem engen Härtungsspektrum notwendig wäre.

Weiterhin hat sich gezeigt, daß dem duroplastischen Pulverlack ohne Beeinträchtigung der gewünschten Eigenschaften des Duroplasten bis zu gewissem Umfang weitere Zusätze zugemischt werden können, zum Beispiel außer den vorgenannten Verlaufmitteln durch Rieselhilfen, Pigmente, Füllstoffe, Verdickungsmittel oder deren Mischung, wobei jedoch der Füllstoff, der meist aus einem anorganischen Material besteht, einen Mengenanteil von 30 Gew.-% des Pulverlacks nicht übersteigen sollte.

Nach der Härtung bildet der Duroplast einen die Schweißnaht des Metallbehälters abdeckenden Streifen, der die Schweißnaht beidseitig überlappt.

Der aus den in der vorstehenden Tabelle angegebenen Formulierungen erhaltene Pulverlack erhärtet zu einem Duroplasten, der nicht nur die notwendige Schlagfestigkeit besitzt, sondern darüber hinaus auch in einem hinreichenden Maße flexibel ist, so daß mit einer solchen Schweißnahtabdeckung versehene Metallbehälter ohne weiteres weiter verformt werden können, zum Beispiel durch Sickenbildung, ohne daß dadurch der Duroplast abplatzt, einreißt oder auf andere Weise beschädigt wird. Der so hergestellte Duroplast besitzt auch eine für viele Anwendungszwecke ausreichend hohe Resistenz gegen die Einwirkung von Chemikalien und genügt den derzeit in den meisten Ländern bestehenden lebensmittelrechtlichen Vorschriften.

Zur näheren Untersuchung der Eigenschaften des Duroplasten, der aus den vorstehend genannten Pulverlacken erhalten wird, wurden dessen Eigenschaften nach Härtung bei einer Härtungstemperatur von 280 °C in Abhängigkeit von der Härtung untersucht. Dazu wurden die Pulverlacke auf ein verzinntes Prüfblech einer Dicke von 0,23 mm des Typs E 2,8/2,8 T 3 aufgetragen. Das Prüfblech wurde anschließend in einem Laboreinbrennofen bei 280 °C erhitzt; die Erhitzungszeiten sind in der nachfolgenden Tabelle in Sekunden angegeben. In dieser Tabelle beziehen sich die Angaben «Beispiel 1, 2, 3, 4» auf die duroplastischen Pulverlacke mit den in der weiter vorstehenden Tabelle angegebenen Zusammensetzungen.

Aushärtungszeit bei 280 °C

| in Sekunden | 20 | 30 | 40 | 50 | 60 |
|---|---|---|---|---|---|
| **Acetontest** | | | | | |
| Beispiel 1 | 10 | 100 | >100 | >100 | >100 |
| Beispiel 2 | 25 | 100 | >100 | >100 | >100 |
| Beispiel 3 | 10 | 100 | >100 | >100 | >100 |
| Beispiel 4 | 10 | 20 | 80 | >100 | >100 |
| **Schlagfestigkeit (Nm)** | | | | | |
| Beispiel 1 | 4 | 60 | 76 | 80 | 80 |
| Beispiel 2 | 4 | 24 | 64 | 80 | 80 |
| Beispiel 3 | 4 | 25 | 50 | 80 | 80 |
| Beispiel 4 | 4 | 25 | 50 | 80 | 80 |

Bei dem in der Tabelle aufgeführten Acetontest handelt es sich um einen Reibtest, der auf einer weitgehend üblichen und angewandten Methode beruht. Danach wird ein Wattebausch mit Aceton getränkt und der Aceton-getränkte Wattebausch von Hand ohne Anwendung von Druck über die zu untersuchende Stelle hin- und herbewegt. Es wird die Anzahl der Hin- und Herbewegungen oder Doppelhübe gezählt, die notwendig sind, um eine vorgegebene Schicht ab- oder durchzuscheuern. In der Tabelle bezeichnen die unter der Bezeichnung Acetontest angegebenen Zahlen die Anzahl solcher Hin- und Herbewegungen.

Die weiter in der Tabelle unter der Bezeichnung Schlagfestigkeit angegebenen Versuche wurden mit einem Kugelschlag-Prüfgerät, Modell 304, der Firma Erichsen GmbH & Co KG, 5870 Hemer-Sundwig, Bundesrepublik Deutschland, durchgeführt. Diese Prüfung genügt den ASTM-Vorschriften G 13 und G 27. Bei diesem Test fällt ein vorgegebener Kugelbolzen aus verschiedenen einstellbaren Fallhöhen auf das Prüfblech, das so angeordnet ist, daß die Kugel auf die der beschichteten Schweißnaht abgekehrte Seite des Prüfblechs fällt. Die in der Tabelle angegebenen Werte sind in Nm angegebene Energiewerte, bei denen der Duroplast reißt oder sich von der Schweißnaht ablöst. Das vorstehend genannte, verwendete Prüfblech E 2,8/2,8 T 3 einer Dicke von 0,23 mm reißt bei einem Energiewert im Bereich von 70–90 Nm. Ein solcher Wert für die Schlagfestigkeit in der Tabelle bedeutet daher, daß die Duroplastbeschichtung bis zum Reißen des Prüfblechs unverändert blieb.

Es ergibt sich somit, daß die nach den angegebenen Formulierungen hergestellten duroplastischen Pulverlacke zu einem Duroplasten gehärtet werden, der eine hohe chemische und mechanische Widerstandsfähigkeit besitzt. Dieser Duroplast genügt außerdem den derzeit üblichen lebensmittelrechtlichen Bestimmungen, so daß der vorstehend beschriebene duroplastische Pulverlack zur Verwendung bei Metallbehältern für Lebensmittel oder Getränke verwendet werden kann. Darüber hinaus besitzen die duroplastischen Pulverlacke ausgezeichnete Verarbeitungseigenschaften. Trotz hoher Reaktivität, die eine Härtung innerhalb weniger Sekunden ermöglicht, sind die beschriebenen Pulverlacke bei Umgebungstemperatur über lange Zeiten ohne chemische Veränderungen haltbar und können auch ohne Gefahr chemischer Veränderungen bei Temperaturen bis zu 100 °C durch Mischung aus den Komponenten hergestellt und verarbeitet werden. Ein besonderer Vorteil dieser Pulverlacke ist auch, daß sie ein vergleichsweise sehr weites Härtungsspektrum besitzen, so daß die Eigenschaften des daraus hergestellten Duroplasten von zufälligen Änderungen in der Härtungsstruktur oder der Härtungszeit weitgehend unabhängig sind.

**Patentansprüche**

1. Duroplastischer Pulverlack auf Epoxidharzbasis, enthaltend ein aromatisches Epoxidharzgemisch aus mindestens zwei Komponenten, deren erste pro Molekül im Mittel maximal 2 Epoxidgruppen und deren zweite pro Molekül im Mittel mehr als 2 Epoxidgruppen enthält, einen sauren Härter und einen Katalysator,
dadurch gekennzeichnet, daß der Härter aus der Gruppe: Kondensationsprodukt des Diglycidylethers von Bisphenol A mit Bisphenol A mit einem auf phenolische Hydroxylgruppen bezogenen Äquivalentgewicht im Bereich von 220–280, saurer Polyester auf der Basis Trimellithsäureanhydrid/aliphatisches Polyol oder deren Mischung ausgewählt ist.

2. Pulverlack nach Anspruch 1, dadurch gekennzeichnet, daß die erste Komponente des aromatischen Epoxidharzgemisches ein Epoxidäquivalentgewicht im Bereich von 500–20 000 hat.

3. Pulverlack nach Anspruch 2, dadurch gekennzeichnet, daß die erste Komponente des aromatischen Epoxidharzgemisches ein Epoxidäquivalentgewicht im Bereich von 800–3000 hat.

4. Pulverlack nach einem der Ansprüche 1 bis 3, dadurch gekennzeichnet, daß die zweite Komponente des aromatischen Epoxidharzgemisches ein epoxidiertes Novolackharz mit einem Epoxidäquivalentgewicht im Bereich von 150–220 ist.

5. Pulverlack nach einem der Ansprüche 1 bis 4, dadurch gekennzeichnet, daß das aromatische Epoxidharzgemisch 5–15 Gew.-% des epoxidierten Novolackharzes enthält, bezogen auf das Gesamtgewicht des aromatischen Epoxidharzgemisches = 100.

6. Pulverlack nach einem der Ansprüche 1 bis 5, dadurch gekennzeichnet, daß der aus dem Kondensationsprodukt des Diglycidylethers von Bisphenol A mit Bisphenol A hergestellte Härter aus dem Diglycidylether von Bisphenol A und Bisphenol A in einem Gewichtsverhältnis im Bereich von 0,5–1,5 gebildet ist.

7. Pulverlack nach Anspruch 6, dadurch gekennzeichnet, daß der aus dem Kondensationsprodukt des Diglycidylethers von Bisphenol A und Bisphenol A im Gewichtsverhältnis im Bereich von 0,5–1,5 hergestellte Härter bei 150 °C eine Viskosität im Bereich von 50–1000 mPas und einen Schmelzbereich von 40–100 °C aufweist.

8. Pulverlack nach Anspruch 6 oder 7, dadurch gekennzeichnet, daß der Pulverlack auf 72–73 Gew.-% des aromatischen Epoxidharzgemisches und 25–27 Gew.-% des Härters zusammengesetzt ist, jeweils bezogen auf das Gesamtgewicht des Pulverlacks = 100.

9. Pulverlack nach einem der Ansprüche 1 bis 8, dadurch gekennzeichnet, daß der Katalysator aus der Gruppe: Imidazol, 2-Methylimidazol, Ethyltriphenylphosphoniumchlorid oder ein anderes Salz desselben, Aluminiumacetylacetonat, primäres, sekundäres oder tertiäres Aminophenol, ein Toluolsulfonsäuresalz ausgewählt ist.

10. Pulverlack nach einem der Ansprüche 1 bis 8, dadurch gekennzeichnet, daß der Pulverlack einen Erweichungspunkt im Bereich von 65–100 °C hat.

11. Pulverlack nach einem der Ansprüche 1 bis 10, dadurch gekennzeichnet, daß der Pulverlack bei einer Temperatur im Bereich von 230–350 °C zu einem flexiblen Duroplasten härtbar ist.

12. Pulverlack nach Anspruch 11, dadurch gekennzeichnet, daß der Pulverlack in einer Zeit von 3 bis 20 Sekunden zu einem flexiblen Duroplasten härtbar ist.

13. Pulverlack nach einem der Ansprüche 1 bis 12, dadurch gekennzeichnet, daß der Pulverlack einen aus der Gruppe: Verlaufmittel, Rieselhilfen, Pigment, Füllstoff, Verdickungsmittel oder deren Mischung ausgewählten Zusatz enthält.

14. Pulverlack nach Anspruch 13, dadurch gekennzeichnet, daß der Anteil des Füllstoffs maximal 30 Gew.-% beträgt, bezogen auf das Gesamtgewicht des Pulverlacks = 100.

15. Verwendung duroplastischer Pulverlacke gemäß Ansprüchen 1 bis 14 zur Schweißnahtabdekkung im Inneren von Metallbehältern für Lebensmittel oder Getränke.

**Claims**

1. Duroplastic powder lacquer based on epoxy resin, containing an aromatic epoxy resin mixture formed from at least two components, the first component having, on average, a maximum of 2 epoxy groups per molecule and the second component having, on average, more than 2 epoxy groups per molecule, an acid hardener and a catalyst, characterised in that the hardener is selected from the group: condensation product of the diglycidyl ether of bisphenol A with bisphenol A having an equivalent weight in the region of 220–280 relative to phenolic hydroxyl groups, acid polyester based on trimellitic acid anhydride/aliphatic polyol or a mixture thereof.

2. Powder lacquer according to claim 1, characterised in that the first component of the aromatic epoxy resin mixture has an epoxy equivalent weight in the region of 500–20,000.

3. Powder lacquer according to claim 2, characterised in that the first component of the aromatic epoxy resin mixture has an epoxy equivalent weight in the region of 800–3,000.

4. Powder lacquer according to one of claims 1 to 3, characterised in that the second component of the aromatic epoxy resin mixture is an epoxidised novolac resin with an epoxy equivalent weight in the region of 150–220.

5. Powder lacquer according to one of claims 1 to 4, characterised in that the aromatic epoxy resin mixture contains 5–15% by wt. of the epoxidised novolac resin, relative to the total weight of the aromatic epoxy resin mixture of 100.

6. Powder lacquer according to one of claims 1 to 5, characterised in that the hardener, which is produced from the condensation product of the diglycidyl ether of bisphenol A with bisphenol A, is formed from the diglycidyl ether of bisphenol A and bisphenol A in a weight ratio in the region of 0.5–1.5.

7. Powder lacquer according to claim 6, characterised in that the hardener, which is produced from the condensation product of the diglycidyl ether of bisphenol A and bisphenol A in the weight ratio in the region of 0.5–1.5, has, at 150 °C, a viscosity in the region of 50–1,000 mPas and a melting range of 40–100 °C.

8. Powder lacquer according to claim 6 or 7, characterised in that the powder lacquer is composed of 72–73% by wt. of the aromatic epoxy resin mixture and 25–27% by wt. of the hardener, each relative to the total weight of the powder lacquer of 100.

9. Powder lacquer according to one of claims 1 to 8, characterised in that the catalyst is selected from the group: imidazol, 2-methylimidazol, ethyltriphenyl phosphonium chloride or another salt thereof, aluminium acetyl acetonate, primary, secondary or tertiary amino phenol, or a toluene sulphonic acid salt.

10. Powder lacquer according to one of claims 1 to 8, characterised in that the powder lacquer has a softening point in the range of 65–100 °C.

11. Powder lacquer according to one of claims 1 to 10, characterised in that the powder lacquer is hardenable at a temperature in the range of 230–350 °C to form a flexible duroplastic.

12. Powder lacquer according to claim 11, characterised in that the powder lacquer is hardenable in a time of 3 to 20 seconds to form a flexible duroplast.

13. Powder lacquer according to one of claims 1 to 12, characterised in that the powder lacquer contains an addition selected from the group: blending agents, flowing aids, pigment, filler substance, thickening agents, or a mixture thereof.

14. Powder lacquer according to claim 13, characterised in that the maximum proportion of filler substance is 30% by wt., relative to the total weight of the powder lacquer of 100.

15. Use of duroplastic powder lacquers according to claims 1 to 14 for covering welds in the interior of metal containers for foodstuffs or beverages.

**Revendications**

1. Laque en poudre thermodurcissable à base de résines époxydes, comprenant un mélange aromatique de résines époxydes constitué par au moins deux composants, dont le premier contient en moyenne par molécule au maximum deux groupes époxydes et dont le second contient en moyenne par molécule plus de deux groupes époxydes, un durcisseur acide et un catalyseur, caractérisée en ce que le durcisseur est choisi dans le groupe: produit de condensation du diglycidyléther de bisphénol A avec du bisphénol A dont le poids équivalent par rapport aux groupes hydroxyles phénoliques est situé dans la plage allant de 220 à 280, polyester acide sur la base d'anhydride d'acide trimellitique/polyol aliphatique ou de leur mélange.

2. Laque en poudre selon la revendication 1, caractérisée en ce que le premier composant du mélange aromatique de résines époxydes a un poids équivalent d'époxyde situé dans la plage allant de 500 à 20000.

3. Laque en poudre selon la revendication 2, caractérisée en ce que le premier composant du mélange aromatique de résines époxydes a un poids équivalent d'époxyde situé dans la plage allant de 800 à 3000.

4. Laque en poudre selon l'une des revendications 1 à 3, caractérisée en ce que le second composant du mélange aromatique de résines époxydes est une résine novolaque époxydée avec un poids équivalent d'époxyde situé dans la plage allant de 150 à 220.

5. Laque en poudre selon l'une des revendications 1 à 4, caractérisée en ce que le mélange aromatique de résines époxydes contient de 5 à 15% en poids de la résine novolaque époxydée, par rapport au poids total du mélange aromatique de résines époxydes = 100.

6. Laque en poudre selon l'une des revendications 1 à 5, caractérisée en ce que le durcisseur obtenu à partir du produit de condensation du diglycidyléther de bisphénol A avec du bisphénol A est constitué à partir du diglycidyléther de bisphénol A et de bisphénol A selon un rapport en poids situé dans la plage allant de 0,5 à 1,5.

7. Laque en poudre selon la revendication 6, caractérisée en ce que le durcisseur obtenu à partir du produit de condensation du diglycidyléther de bisphénol A et de bisphénol A selon un rapport en poids situé dans la plage allant de 0,5 à 1,5 présente à 150° une viscosité située dans la plage allant de 50 à 1000 mPas et un régime de fusion allant de 40 à 100 °C.

8. Laque en poudre selon la revendication 6 ou 7, caractérisée en ce que la laque en poudre est constituée par la combinaison de 72 à 73% en poids du mélange aromatique de résines époxydes et de 25 à 27% en poids du durcisseur, chacun par rapport au poids total de la laque en poudre = 100.

9. Laque en poudre selon l'une des revendications 1 à 8, caractérisée en ce que le catalyseur est choisi dans le groupe: imidazol, 2-méthylimidazol, chlorure, d'éthyltriphénylphosphonium ou d'un autre sel de celui-ci, acétonate d'aluminiumacétyle, d'aminophénol primaire, secondaire ou tertiaire, sel acide de toluolsulfone.

10. Laque en poudre selon l'une des revendications 1 à 8, caractérisée en ce que la laque en poudre présente un point de ramollissement situé dans la plage allant de 65 à 100 °C.

11. Laque en poudre selon l'une des revendications 1 à 10, caractérisée en ce que la laque en poudre peut être durcie en une résine thermodurcissable flexible à une température située dans la plage allant de 230 à 350 °C.

12. Laque en poudre selon la revendication 11, caractérisée en ce que la laque en poudre peut être durcie en une résine thermodurcissable flexible pendant une durée allant de 3 à 20 secondes.

13. Laque en poudre selon l'une des revendications 1 à 12, caractérisée en ce que la laque en poudre contient un additif choisi dans le groupe: agent nivelant, agent auxiliaire d'écoulement, pigment, charge, épaississant, ou leur mélange.

14. Laque en poudre selon la revendication 13, caractérisée en ce que la partie de charge est au maximum de 30% en poids, par rapport au poids total de la laque en poudre = 100.

15. Utilisation de laques en poudre thermodurcissables selon les revendications 1 à 14, en vue du recouvrement d'un cordon de soudure à l'intérieur de boîtes métalliques pour denrées alimentaires ou boissons.